# EUROPEAN PATENT SPECIFICATION

(11) **EP 1 741 510 B1**
(45) Date of publication and mention of the grant of the patent: **28.01.2009**
(21) Application number: 06116296.2
(22) Date of filing: 29.06.2006
(51) Int. Cl.: B23K 26/32, C03B 23/20, H01J 9/26, H01J 9/18, G02F 1/1339, B23K 101/04, B23K 101/36

(54) **Glass-to-glass welding method using laser; vacuum envelope manufactured by the method ; Anode asssembly and electron emission display comprising such vacuum envelope**
Glas-zu-Glas Laser-Schweissverfahren; durch das Verfahren hergestellte Vakuumhülle; Anodeverbindung und Elektronenemissionsanzeige mit einer solchen Vakuumhülle
Procédé de soudage laser verre sur verre ; Anode et enveloppe sous vide fabriquée au moyen de ce procédé; dispositif d'affichage à émetteur d'électrons comprenant une telle enveloppe sous vide

(30) Priority: 30.06.2005 US 695188 P; 28.06.2006 US 427195
(43) Date of publication of application: 10.01.2007
(73) Proprietor: Samsung SDI Co., Ltd., Suwon-si Gyeonggi-do (KR)
(72) Inventor: Jeon, Eun-Suk Legal&IP Team, Samsung SDI Co., Ltd, Kyunggi-do (KR); Antipin, Sergey, 107014 Moscow (RU); Jung, Hoe-Rok Legal&IP Team, Samsung SDI Co., Ltd, Kyunggi-do (KR)
(74) Representative: Hengelhaupt, Jürgen

(56) References cited:
- EP-A2- 0 978 489
- FR-A1- 2 727 242
- US-A- 4 879 450
- US-A- 5 115 612
- US-A- 5 693 111
- US-A- 6 109 994
- US-B1- 6 373 025
- DATABASE WPI Week 197838 Derwent Publications Ltd., London, GB; AN 1978-67851A XP002404327 -& JP 53 094239 A (TOKYO SHIBAURA ELECTRIC CO) 18 August 1978 (1978-08-18)

## Description

The present invention relates to a joining method according to the preamble of claim 1 (see, for example US-A-6 109 994) and more particularly, to a method of directly joining one glass item to another glass item using a laser. The present invention further relates to an anode assembly according to the preamble of claim 6 (see, for example, US-A-6 109 994) and electron emission displays having vacuum envelopes manufactured by this glass-to-glass joining method.

### Related Art

Generally, in order to make parts stick together, an adhesive material is used as a medium between the parts.

For example, in an electron emission display such as one of the conventional flat panel displays, spacers are fixed on a substrate with an adhesive material.

The substrate and the spacers are generally formed of glass and each spacer has a fine thickness consonant with the properties of the electron emission display.

A process for joining parts together using the adhesive material is complicated and the adhesive material increases the manufacturing costs.

Since the adhesive material is deformed during a sintering process, the glass parts may be displaced. Therefore, it is difficult to expect accurate bonding and alignment of the parts.

Furthermore, the adhesive material may cause environmental pollution.

When a process for sealing the substrate together and exhausting air out of a vacuum envelope is performed to manufacture a final product using the vacuum envelope incorporating electron emission elements, the degree of the vacuum inside the vacuum envelope may be lowered due to the outgassing generated from the adhesive material, thereby causing a deterioration in the quality of the final product. As described above, when glass parts are bonded together with an adhesive material, many problems occur which are attributable to the adhesive material. Therefore, there is a need for a joining method without using the adhesive material.

Furthermore, US 6 109 994 and US 5 693 111 disclose joining-methods employing a laser beam. Also, EP 0 978 489 discloses the use of a laser pulse for repeatedly heating a joining portion between two glass plates above the melting temperature. Furthermore, FR 2 727 242 discloses an anode assembly, wherein the spacer is in direct contact with the anode substrate.

### SUMMARY OF THE INVENTION

It is an object of the present invention to provide an improved process for joining work pieces such as glass without using adhesive materials and improved sealed vacuum envelopes for electron emission displays.

The present invention provides a method of joining parts together without using an adhesive material.

The present invention also provides a vacuum envelope for an electron emission display manufactured by the joining method.

The present invention also provides a method of manufacturing an electron emission display, which can bond spacers on a substrate without using an adhesive material.

The present invention also provides an electron emission display manufactured through the joining method.

The present invention further provides an anode assembly for an electron emission display manufactured by the joining method.

In an exemplary embodiment of the present invention, a joining method according to claim 1 is defined.

The method of projecting the laser beam is performed by sequentially projecting laser beams having different energies.

That is, the method of projecting the laser beam includes projecting a first laser beam having a predetermined energy and projecting a second laser beam having an energy lower than the predetermined energy of the first laser beam.

The joining method may incorporate a focusing of the laser beam onto the interface between the parts to be joined together.

The laser beam is preferably generated by a solid state laser, wherein the solid state laser is a third harmonic Nd/YAG laser.

Alternatively, the laser beam may be generated by an ultra violet (i.e., "UV") eximer laser.

The parts to be joined together may be formed of glass materials.

The parts to be joined are formed with the shape of a plate and one of the parts is arranged on the other in a perpendicular direction.

The width of the interface is equal to or greater than 0.07mm.

In another exemplary embodiment, an electron emission display contemplates a cathode substrate on which an electron emission unit is provided, an anode substrate according to claim 6 is provided and a spacer arranged between the cathode and anode substrate and joined to the anode substrate; the spacer is joined to the anode substrate by directly contacting the anode substrate.

The spacer may be formed with a bar shape.

The electron emission display may be a Field Emission Array (FEA) type electron emission display.

In still another exemplary embodiment, an anode assembly of an electron emission display according to claim 6 is defined.

### BRIEF DESCRIPTION OF THE DRAWINGS

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
FIG. 1 is a concept view for illustrating a joining method as an embodiment of the present invention;
FIG. 2 is an enlarged view of a portion A of FIG. 1;
FIGs. 3 through 5 are schematic views illustrating sequential processes for joining parts together as the embodiment of the present invention; and
FIG. 6 is a sectional view of an electron emission display having a vacuum envelope constructed as an embodiment of the present invention.

### DETAILED DESCRIPTION OF INVENTION

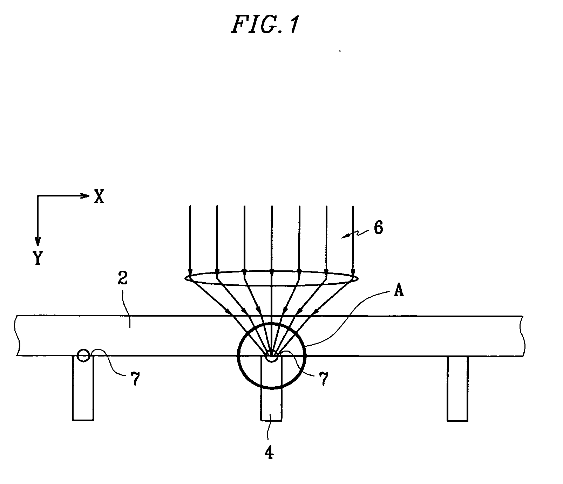

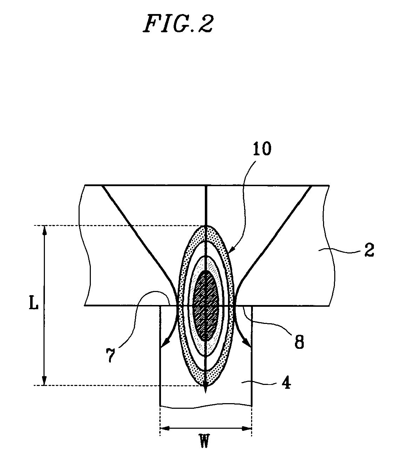

FIG. 1 is a conceptual view illustrating a joining technique as practiced as an embodiment of the present invention and FIG. 2 is an enlarged view of the portion A of FIG. 1.

Referring to FIGs. 1 and 2, a joining technique of this embodiment joins different parts 2 and 4 together by irradiating the interface between parts 2 and 4 with laser beam 6 projecting through one of the parts 2 and 4. That is, parts 2 and 4 are thermally joined together by the heat of laser beam 6.

In this embodiment, substrate 2 and spacer 4 of an electron emission display are respectively exemplars of parts 2 and 4. Substrate 2 and spacer 4 are formed of glass. In the embodiment, the glass may include any kind of glasses (for example: PD 200, soda-lime and borosilicate) that can be used in display products.

In addition, laser beam 6 is irradiated in a direction (a Y-direction in the drawing) which is normal to interface 7 between parts 2 and 4, through substrate 2. At this point, laser beam 6 can be controlled by a laser generation unit (not shown) so that laser beam 6 can have a predetermined energy and can be focused onto interface 7.

As shown in FIG. 2, parts 2 and 4 are thermally joined by laser beam 6 in an orientation where parts 2 and 4 are in direct contact with each other, and a longitudinal axis of one of the parts 2,4 is perpendicularly positioned on the other part.

Since spacer 4 is formed in a fine, and very precise structure having a width of approximately 0.07mm or more, the joinder of parts 2 and 4 is performed by micro joining, by which a minimum width W of joining surface 8 along interface 7 between parts 2 and 4 can be 0.07mm or greater. The width of part 4 and joining surface 8 are only examples illustrating the principles of the present invention; the present invention is not limited to the particulars of these exemplars. That is, the widths of part 4 and joining surface 8 can be maintained within a range from 0.07mm to several milimeters, for example, approximately 5mm.

As described above, according to this embodiment, parts 2, 4 can be directly joined together by laser beams without using any intermediate medium such as an adhesive material.

By the above described direct joining method, a thermally joined junction 10 is formed around interface 7 between parts 2, 4.

Thermally joined junction 10 can be formed with a predetermined shape by the heat of laser beam 6. In this embodiment, thermally joined junction 10 is formed in a spot having a longitudinal axis oriented with reference to the longitudinal dimensions of parts 2, 4. At this point, thermally joined junction 10 can have contour lines defined by thermal gradients of laser beam 6 (see FIG. 2).

Meanwhile, laser beam 6 can be formed by a solid state laser such as a third harmonic Nd:YGA laser.

Alternatively, laser beam 6 can be formed by a UV eximer laser.

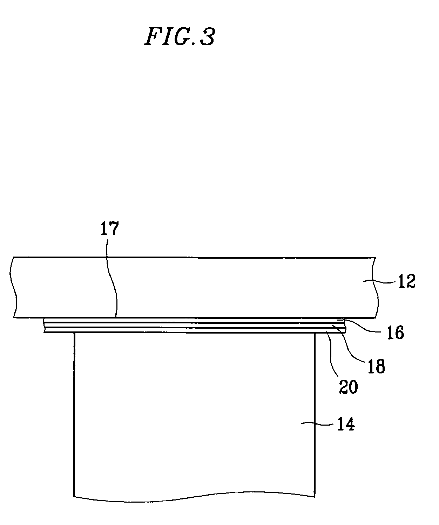

FIGs. 3 through 5 are schematic views illustrating sequential processes for joining parts together according to an embodiment of the present invention.

Referring first to FIG. 3, spacer 14 that is one of the parts to be joined together is arranged on substrate 12 that is the other of the parts. At this point, spacer 14 is arranged to be perpendicularly to the major axial dimension of substrate 12. Substrate 12 and spacer 14 are formed of glass.

Substrate 12 may be an anode substrate of the electron emission display. At this point, an indium tin oxide (ITO) layer 16, a black layer 18 that is called a black matrix (BM), a metal layer 20 formed of, for example, aluminum may be formed sequentially on the substrate 12. Since ITO layer 16, black layer 18, and metal layer 20 are well known in the art, a more detailed description thereof will be omitted here.

In this embodiment, spacer 14 is formed with a bar, or rectangular shape and arranged on the metal layer 20 with respect to the black layer 18.

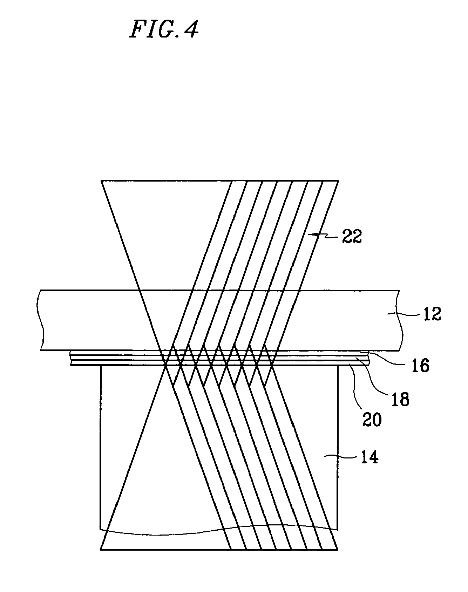

When spacer 14 is arranged on substrate 12, as shown in FIG. 4, substrate 12 is irradiated by a first laser beam in a direction normal to interface 17 between substrate 12 and spacer 14.

At this point, as described above, first laser beam 22 is controlled by the laser control unit such that first laser beam 22 has a predetermined energy and is focused on interface 17.

In this embodiment, in order to generate first laser beam 22, a third harmonic Nd:YGA laser having an energy of 4.5W is used.

First laser beam 22 dissolves and removes ITO layer 16, black layer 18 and metal layer 20 that have been formed on substrate 12 before substrate 12 and spacer 14 are thermally joined together.

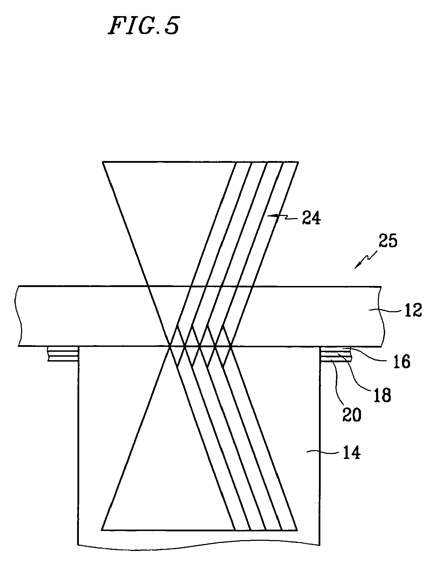

Then, as shown in FIG. 5, the interface between substrate 12 and spacer 14 is irradiated by second laser beam 24. The energy of second laser beam 24 is approximately one watt lower than that of first laser beam 22.

Second laser beam 24 functions to thermally bond substrate 12 and spacer 14 together. That is, substrate 12 and spacer 14 are thermally joined together by second laser beam 24, thereby forming anode assembly 25.

As described above, parts such as substrate 12 and spacer 14 are irradiated by sequential application with laser beams 22, 24 of different energy so that parts 12, 14 can be directly joined together.

In an actual process, a plurality of spacers 14 are arranged on substrate 12 and spacers 14 are simultaneously thermally joined, or bonded, onto the substrate 12 by laser beams 22, 24 exhibiting different energy emitted by the corresponding lasers.

In this embodiment, although the spacer is joined on the anode substrate, the present invention is not limited to this example. For example, the joinder method of the present invention can be applied for joining the spacer onto a cathode substrate.

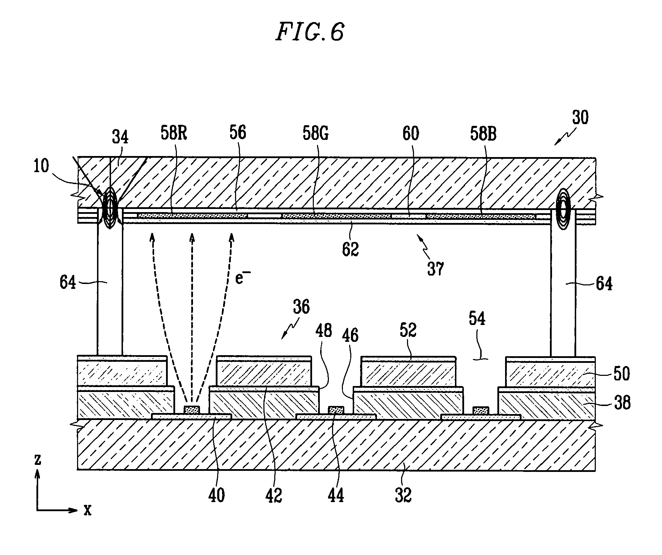

FIG. 6 is a sectional view of an electron emission display having a vacuum envelope constructed according to the principles of the present invention. In this embodiment, an FEA electron emission display is used as an exemplar.

Referring to FIG. 6, an electron emission display 30 of this embodiment includes a vacuum envelope having first (cathode) and second (anode) substrates 32 and 34. A sealing member (not shown) is provided at the peripheries of first and the second substrates 32, 34 to seal substrates 32, 34 together.

An electron emission unit 36 designed to emit electrons is provided on first substrate 32 and a light emission unit 37 configured to display varying video images when excited by the electron beams generated by electron emission unit 36, is provided on second substrate 34.

Electron emission unit 36 includes cathode electrodes 40, gate electrodes 42 interlinking the cathode electrodes 40 by crossing cathode electrodes 40 at right angles with a first insulating layer 38 between gate electrodes 42 and cathode electrodes 40, and a plurality of electron emission regions 44 formed on cathode electrodes 40.

When the crossing regions of cathode electrodes 40 and gate electrodes 42 define pixel regions, electron emission regions 44 are formed at the respective pixel regions and openings 46 and 48 corresponding to the respective electron emission regions 44 are formed through first insulating layer 38 and gate electrodes 42 to expose electron emission regions 44 on first substrate 32.

Electron emission regions 44 are formed of a material emitting electrons when an electric field is applied thereto under a vacuum atmosphere, such as a carbonaceous material or a nanometer-sized material. In other words, the electron emission regions 44 can be formed of carbon nanotubes, graphite, graphite nanofibers, diamonds, diamond-like carbon, C60(fullerene), silicon nanowires or a combination thereof.

Alternatively, electron emission regions 44 can be tips formed of a Mo-based or Si-based material.

A focusing electrode 52 can be formed on gate electrodes 42 and first insulating layer 38. A second insulating layer 50 is placed under focusing electrode 52 to insulate focusing electrode 52 from gate electrodes 42, and openings 54 are formed through focusing electrode 52 at the respective pixel regions to generally focus the electrons emitted from the corresponding pixel regions. Alternatively, openings 54 can be formed to correspond to electron emission regions 44 in order to independently focus the electrons emitted from those electron emission regions 44.

Light emission unit 37 includes ITO layer 56 formed on second substrate 34, red (R), green (G) and blue (B) phosphor layers 58R, 58G and 58B formed on ITO layer 56, and black layers 60 arranged between R, G and B phosphor layers 58R, 58G and 58B to enhance the contrast of the screen upon which the visual images are displayed. Each crossing region of cathode electrodes 40 and gate electrodes 42 corresponds to a single color phosphor layer.

A metal layer 62 formed of, for example, aluminum, is formed on the R, G and B phosphor layers 58R, 58G and 58B and black layer 60. Metal layer 62 receives a high voltage required to accelerate the electron beams, and reflects the visible light rays which are radiated from R, G and B phosphor layers 58R, 58G and 58B to the first substrate 32, towards the second substrate 34, thereby increasing the screen's luminance.

Spacers 64 are arranged between first and the second substrates 32 and 34 to support the vacuum envelope against the pressure applied thereto and to maintain a gap between first and second substrates 32, 34. Spacers 64 are located in correspondence with black layers 60 so that spacers 64 do not block the areas occupied by R, G and B phosphor layers 58R, 58G and 58B. Spacers 64 are directly joined to second substrate 34 according to the above-described joining method.

Although the FEA type electron emission display is described as an exemplar of the present invention, the present invention is not limited to the exemplar. That is, the present invention can be applied to other types of electron emission displays.

Furthermore, the present invention can also be applied to a backlight unit used as a light source in a flat panel display such as a liquid crystal display.

According to the present invention, since the parts are joined together without using any adhesive material, the manufacturing process can be simplified. In addition, all damages caused by the adhesive material are avoided in advance.

Therefore, the productivity of the electron emission displays requiring the spacers can be improved.

Furthermore, since the joiner of the structure of the spacers is improved, the screen size of the flat display can be more enlarged according to consumers' preferences.

## Claims

1. A joining method comprising:
arranging parts that will be joined together such that the parts contact each other; and
irradiating a laser beam toward an interface between the parts through one of the parts in a direction normal to the interface to form a thermal-joining portion around the interface,
wherein the irradiating the laser beam is performed by sequentially irradiating laser beams of different energies, and
**characterized in that**
the irradiating the laser beam includes irradiating a first laser beam having a predetermined energy and irradiating a second laser beam having an energy lower than the predetermined energy of the first laser beam,
wherein
(i) the laser beam is generated by a solid state laser and the solid state laser is a third harmonic Nd:YAG laser,
or
(ii) the laser beam is generated by a UV eximer laser.

2. The joining method of claim 1, further comprising focusing the laser beam on the interface.

3. The joining method of claim 1, wherein the parts are formed of glass.

4. The joining method of claim 1, wherein the parts are formed in a plate shape and one of the parts is arranged on the other of the parts in a perpendicular direction.

5. The joining method of claim 4, wherein a width of the interface is equal to or greater than 0.07mm.

6. An anode assembly of an electron emission display, comprising:
a substrate (12);
a light emission unit provided on the substrate (12); and
a spacer (14) joined on the substrate (12) in a state where the spacer directly contacts the substrate (12),
wherein a thermal-joining portion (10) is formed around an interface between the substrate (12) and the spacer (14) by a laser beam,
**characterized in that** the thermal-joining portion (10) is formed in a spot having a longitudinal diameter with reference to the width of the spacer (14), and
wherein the longitudinal section of the thermal-joining spot portion (10) is bigger than the width of the spacer (14), and
and wherein an anode layer (16), a black layer (18), and a metal layer (20) are disposed on the substrate (12) at the peripheries of the thermal-joining portion (10) between the spacer (14) and the substrate (12).

7. The anode assembly of claim 6, wherein the substrate (12) and the spacer (14) are formed of glass.

8. The anode assembly of claim 6, wherein the spacer (14) is formed in a bar-shape.

9. An electron emission display comprising:
a cathode substrate on which an electron emission unit is provided;
an anode assembly according to one of claims 6 through 8;
wherein the spacer (14) is arranged between the cathode and anode substrate.

10. The electron emission display of claim 9, wherein the electron emission display is an FEA type electron emission display.

## Patentansprüche

1. Fügeverfahren, aufweisend:
Anordnung von Teilen, die derart zusammengefügt werden, dass die Teile miteinander in Kontakt stehen; und
Strahlung eines Laserstrahls auf eine Grenzfläche zwischen den Teilen durch einen der Teile hindurch in einer Normalenrichtung zur Grenzfläche zur Ausbildung eines thermischen Fügebereichs um die Grenzfläche herum,
wobei die Bestrahlung mit dem Laserstrahl durch eine sequentielle Bestrahlung mit Laserstrahlen verschiedener Energien durchgeführt wird,
**dadurch gekennzeichnet, dass**
die Bestrahlung mit dem Laserstrahl die Bestrahlung mit einem ersten Laserstrahl, der eine vorbestimmte Energie aufweist, sowie die Bestrahlung mit einem zweiten Laserstrahl, der eine Energie aufweist, die geringer als die vorbestimmte Energie des ersten Laserstrahls ist, aufweist,
wobei
(i) der Laserstrahl mit einem Festkörperlaser erzeugt wird und der Festkörperlaser ein zur Erzeugung der dritten Harmonischen ausgebildeter Nd:YAG-Laser ist,
oder
(ii) der Laserstrahl mit einem UV-Excimerlaser erzeugt wird.

2. Fügeverfahren nach Anspruch 1, weiterhin aufweisend die Fokussierung des Laserstrahls auf die Grenzfläche.

3. Fügeverfahren nach Anspruch 1, wobei die Teile aus Glas ausgebildet werden.

4. Fügeverfahren nach Anspruch 1, wobei die Teile in einer Plattenform ausgebildet werden und einer der Teile in einer senkrechten Richtung auf dem anderen der Teile angeordnet wird.

5. Fügeverfahren nach Anspruch 4, wobei eine Breite der Grenzfläche gleich oder größer als 0,07 mm ist.

6. Anodeverbindung für eine Elektronenemissionsanzeige, aufweisend:
ein Substrat (12);
eine auf dem Substrat (12) bereitgestellte Lichtemissionseinheit; und
einen Abstandshalter (14), der auf dem Substrat (12) in einem Zustand angefügt ist, in dem der Abstandshalter direkt mit dem Substrat (12) in Kontakt steht,
wobei ein thermischer Fügebereich (10) mittels eines Laserstrahls um eine Grenzfläche zwischen dem Substrat (12) und dem Abstandshalter (14) herum ausgebildet ist,
**dadurch gekennzeichnet, dass**
der thermische Fügebereich (10) in einem Fleck ausgebildet ist, der einen Längsdurchmesser bezüglich der Breite des Abstandshalters (14) aufweist,
wobei der Längsabschnitt des thermischen Fügefleckbereichs (10) größer als die Breite des Abstandshalters (14) ist,
und wobei eine Anodenschicht (16), eine schwarze Schicht (18) und eine Metallschicht (20) auf dem Substrat auf den Umfängen des thermischen Fügebereichs (10) zwischen dem Abstandshalter (14) und dem Substrat (12) angeordnet sind.

7. Anodeverbindung nach Anspruch 6, wobei das Substrat (12) und der Abstandshalter (14) aus Glas ausgebildet sind.

8. Anodeverbindung nach Anspruch 6, wobei der Abstandshalter (14) stabförmig ausgebildet ist.

9. Elektronenemissionsanzeige, aufweisend:
ein Kathodensubstrat, auf dem eine Elektronenemissionseinheit bereitgestellt wird;
eine Anodeverbindung nach einem der Ansprüche 6 bis 8;
wobei der Abstandshalter (14) zwischen dem Kathoden- und Anodensubstrat angeordnet ist.

10. Elektronenemissionsanzeige nach Anspruch 9, wobei die Elektronenemissionsanzeige eine Elektronenemissionsanzeige vom Feldemitterarraytyp ist.

## Revendications

1. Procédé d'assemblage comprenant :
l'agencement de pièces qui seront assemblées entre elles de manière que les pièces soient en contact entre elles ; et
la projection d'un faisceau laser vers une interface entre les pièces à travers l'une des pièces dans une direction normale à l'interface pour former une partie de jonction thermique autour de l'interface,
dans lequel la projection du faisceau laser est effectuée en projetant séquentiellement des faisceaux laser ayant des énergies différentes, et
**caractérisé en ce que**
la projection du faisceau laser comprend la projection d'un premier faisceau laser ayant une énergie prédéterminée et la projection d'un second faisceau laser ayant une énergie inférieure à l'énergie prédéterminée du premier faisceau laser,
dans lequel
(i) le faisceau laser est généré par un laser à solide et le laser à solide est un laser Nd:YAG de troisième harmonique, ou
(ii) le faisceau laser est généré par un laser à excimère à UV.

2. Procédé d'assemblage selon la revendication 1, comprenant en outre la focalisation du faisceau laser sur l'interface.

3. Procédé d'assemblage selon la revendication 1, dans lequel les pièces sont formées de verre.

4. Procédé d'assemblage selon la revendication 1, dans lequel les pièces sont réalisées sous la forme d'une plaque et l'une des pièces est agencée sur l'autre des pièces dans une direction perpendiculaire.

5. Procédé d'assemblage selon la revendication 4, dans lequel la largeur de l'interface est égale ou supérieure à 0,07 mm.

6. Ensemble à anode d'un dispositif d'affichage à émission d'électrons, comportant :
un substrat (12) ;
une unité d'émission de lumière située sur le substrat (12) ; et
une entretoise (14) assemblée sur le substrat (12) dans un état où l'entretoise est en contact direct avec le substrat (12),
dans lequel la partie de jonction thermique (10) est formée autour d'une interface entre le substrat (12) et l'entretoise (14) par un faisceau laser,
**caractérisé en ce que** la partie de jonction thermique (10) est formée en un point ayant un diamètre longitudinal en référence à la largeur de l'entretoise (14), et
dans lequel la section longitudinale de la partie du point de jonction thermique (10) est plus grande que la largeur de l'entretoise (14), et
dans lequel une couche d'anode (16), une couche noire (18) et une couche de métal (20) sont disposées sur le substrat (12) aux périphéries de la partie de jonction thermique (10) entre l'entretoise (14) et le substrat (12).

7. Ensemble à anode selon la revendication 6, dans lequel le substrat (12) et l'entretoise (14) sont formés de verre.

8. Ensemble à anode selon la revendication 6, dans lequel l'entretoise (14) est réalisée sous la forme d'une barre.

9. Dispositif d'affichage à émission d'électrons comportant :
un substrat de cathode sur lequel une unité d'émission d'électrons est située ;
un ensemble à anode selon l'une des revendications 6 à 8 ;
dans lequel l'entretoise (14) est agencée entre la cathode et le substrat d'anode.

10. Dispositif d'affichage à émission d'électrons selon la revendication 9, lequel dispositif d'affichage à émission d'électrons est un dispositif d'affichage à émission d'électrons de type FEA.
